Europäisches Patentamt

(19) European Patent Office

Office européen des brevets

(11) Numéro de publication: **0 279 759**
**A1**

# (12) DEMANDE DE BREVET EUROPEEN

(21) Numéro de dépôt: 88430003.9

(22) Date de dépôt: 29.01.88

(51) Int. Cl.⁴: **G 01 D 5/39**

(30) Priorité: 18.02.87 FR 8702347

(43) Date de publication de la demande:
24.08.88 Bulletin 88/34

(84) Etats contractants désignés:
AT BE CH DE ES FR GB IT LI NL SE

(71) Demandeur: **Izard, Pierre**
**1, Avenue Pierre**
**F-13400 Aubagne (FR)**

(72) Inventeur: **Izard, Pierre**
**1, Avenue Pierre**
**F-13400 Aubagne (FR)**

(74) Mandataire: **Azais, Henri et al**
**c/o CABINET BEAU DE LOMENIE 14, rue Raphael**
**F-13008 Marseille (FR)**

(54) **Procédés et dispositifs pour relever des chiffres décimaux sur des indicateurs numériques, notamment sur des compteurs.**

(57) Un dispositif selon l'invention pour relever les chiffres affichés sur l'indicateur numérique d'un compteur (1), comporte un boîtier (4) qui est fixé sur le compteur et qui contient un dispositif optique (8) et un analyseur d'images à balayage (9). Le dispositif optique forme une image de l'indicateur numérique dans le plan image de l'analyseur. Le signal vidéo émis par l'analyseur est converti en signaux binaires élémentaires par un codeur numérique et ces signaux binaires sont transmis à un dispositif de reconnaissance de forme comportant un microprocesseur qui est programmé pour comparer chaque combinaison de signaux binaires correspondant à un chiffre décimal à dix combinaisons inscrites dans une mémoire qui correspondent aux dix chiffres décimaux.

Fig. 2

EP 0 279 759 A1

## Description

Procédés et dispositifs pour relever des chiffres décimaux sur des indicateurs numériques, notamment sur des compteurs.

La présente invention a pour objet des procédés et des dispositifs pour relever des chiffres décimaux sur des indicateurs numériques, notamment sur des compteurs, lesquels indicateurs peuvent être des indicateurs à roues décimales ou des afficheurs lumineux à diodes électroluminescentes ou à cristaux liquides équipant, notamment, des compteurs d'eau, de gaz ou d'électricité.

Le secteur technique de l'invention est celui de la construction des compteurs et des réseaux de télémesure.

On connaît déjà des réseaux permettant de relever à distance des compteurs numériques décimaux. Dans ces dispositifs connus, les compteurs sont équipés d'une tête émettrice d'impulsions qui correspondent chacune à une quantité de fluide ou d'énergie électrique consommée par l'abonné.

Par exemple, si le compteur comporte des roues codeuses, la roue des unités fournit une impulsion à chaque tour de roue.

Chaque compteur comporte un registre à décalage ou une mémoire vive (RAM), alimentée en secours par une pile qui évite normalement l'effacement des valeurs mémorisées. Le centre de traitement comporte un ordinateur qui est relié aux divers compteurs par une ligne téléphonique.

L'ordinateur central interroge périodiquement la mémoire de chaque compteur et comptabilise le nombre d'impulsions enregistrées dans celle-ci.

Après pondération de ces impulsions, il en déduit le volume de fluide ou la quantité d'énergie électrique consommée depuis le relevé précédent.

Ces dispositifs connus comportent plusieurs inconvénients.

Avant de relier les compteurs au réseau de télémesure, il faut relever chaque compteur ou bien mettre le contenu de chaque mémoire en conformité avec l'indication du compteur à l'aide d'un terminal d'ordinateur portable.

Les mémoires locales peuvent être faussées ou brouillées par des parasites, ce qui nécessite de contrôler périodiquement la conformité du contenu de la mémoire avec le nombre indiqué par le compteur.

En cas de coupure de l'alimentation électrique, la pile secourant la mémoire vive peut se décharger entièrement et, dans ce cas, on perd la totalité de l'information mémorisée, ce qui conduit à des erreurs de facturation importantes.

Le problème que l'invention cherche à résoudre est de procurer des moyens permettant de relever les compteurs en évitant les inconvénients décrits ci-dessus et, notamment des moyens qui assurent, de façon absolue, une conformité certaine entre les chiffres relevés à distance et les chiffres décimaux affichés sur un indicateur numérique.

La solution au problème posé est un procédé pour relever des chiffres décimaux affichés par des indicateurs numériques, notamment par des compteurs, qui comporte les opérations suivantes :

- au moyen d'un dispositif optique, on forme sur la surface sensible d'un analyseur d'image, une image desdits chiffres décimaux ;

- on convertit localement les signaux vidéo délivrés par ledit analyseur d'image en signaux binaires au moyen d'un codeur binaire;

- on entre lesdits signaux binaires dans un dispositif de reconnaissance de forme comportant un processeur qui est programmé pour comparer les combinaisons de signaux binaires correspondant à chaque chiffre décimal avec dix combinaisons enregistrées dans une mémoire afin d'identifier chaque chiffre décimal;

- on convertit chaque chiffre décimal en un nombre binaire;

- et on traite lesdits nombres binaires dans un ordinateur central.

Selon un mode de réalisation préférentiel, les lignes de balayage dudit analyseur d'images sont disposées dans le sens de la hauteur des chiffres affichés, de telle sorte que chaque ligne recoupe un seul chiffre et que deux chiffres successifs sont séparés par plusieurs lignes.

Un dispositif selon l'invention, pour relever à distance des indicateurs numériques équipant des compteurs, comporte un dispositif optique qui peut être placé en regard de l'indicateur numérique de chaque compter; un analyseur d'image électronique, dont la surface sensible est disposée dans le plan image dudit dispositif optique; un codeur numérique qui reçoit séquentiellement les signaux vidéo délivrés par un ou plusieurs analyseurs d'image et qui les convertit en signaux binaires et, d'autre part, un microprocesseur qui comporte une mémoire dans laquelle sont enregistrés un ou plusieurs ensembles de combinaisons de signaux binaires correspondant à chacun des chiffres décimaux et qui est programmé pour comparer chaque combinaison de signaux binaires délivrée par ledit codeur numérique aux combinaisons enregistrées afin d'identifier chacun des chiffres décimaux, puis pour convertir chaque chiffre décimal en un nombre binaire et pour enregistrer lesdits nombres binaires; et un ordinateur central qui est programmé pour traiter lesdits nombres binaires.

Selon un mode de réalisation préférentiel, on regroupe plusieurs compteurs appartenant à un même ensemble, par exemple à un même bâtiment comportant au moins un poste téléphonique.

Dans ce cas, un dispositif selon l'invention comporte un équipement de télétransmission commun à tout le groupe, qui est intercalé entre la ligne et le poste téléphonique, lequel équipement de télétransmission reçoit tous les appels téléphoniques arrivant sur la ligne et comporte un code d'adresse particulier et des moyens pour vérifier, après chaque appel, qu'il reçoit de l'ordinateur central ledit code d'adresse dans un délai déterminé après avoir pris la ligne téléphonique et ledit équipement de télétransmission comporte des moyens pour commander séquentiellement l'analyse des images des indicateurs numériques de tous les compteurs dudit groupe lorsqu'il a reçu ledit code d'adresse dans le délai voulu.

L'invention a pour résultat le relevé à distance des compteurs, par exemple des compteurs d'eau, de gaz ou d'électricité des abonnés aux réseaux publics.

Bien entendu, cette application n'est pas limitative et les procédés et dispositifs selon l'invention peuvent servir à relever à distance toutes sortes d'indicateurs numériques, par exemple des indicateurs de température ou de pression dans une installation industrielle, des compteurs du nombre de voitures passant en un point donné etc.....

La différence essentielle entre les procédés et dispositifs selon l'invention et les procédés de télémesure déjà connus est que l'on part des chiffres qui apparaissent sur l'indicateur numérique, que l'on transforme en signaux vidéo au moyen d'une caméra vidéo simplifiée, puis que l'on transforme localement en signaux binaires élémentaires, c'est-à-dire en faisant correspondre à chaque point de l'image un signal 1 ou 0, de sorte qu'il suffit de peu d'unités d'information binaire (ou bits) pour donner une information suffisante à l'identification des chiffres sans erreur possible. Les signaux binaires ainsi obtenus sont faciles à transmettre sur une ligne téléphonique et à décoder au poste central.

La transmission au poste central peut être faite en utilisant les lignes téléphoniques des abonnés pendant les heures de nuit, sans causer aucune gêne à ceux-ci et sans nécessiter aucune transformation de ces lignes autre que le branchement d'un "modem", c'est-à-dire d'un module de conversion des signaux binaires en impulsions de fréquence audio pouvant transiter sur les lignes téléphoniques.

Les procédés et dispositifs selon l'invention évitent d'avoir à tenir compte des chiffres initiaux comme c'est le cas dans les systèmes de télétransmission d'impulsions émises par le compteur. Elles évitent aussi les risques d'effacement des mémoires puisque les chiffres affichés sur l'indicateur numérique constituent une mémoire permanente.

La description suivante se réfère aux dessins annexés qui représentent, sans aucun caractère limitatif, un exemple de réalisation d'un dispositif de télérelevé selon l'invention.

La figure 1 est une vue de face d'un compteur.

La figure 2 est une vue en coupe d'un compteur équipé d'un premier mode de réalisation d'un dispositif selon l'invention.

Les figures 3 et 4 représentent le balayage de l'indicateur numérique par des lignes respectivement horizontales ou verticales.

La figure 5 est un bloc diagramme représentant schématiquement une partie d'un réseau de télérelevé selon l'invention.

La figure 6 est un bloc diagramme représentant les circuits de synchronisation et d'alimentation des analyseurs d'image.

La figure 7 est un bloc diagramme représentant une variante de réalisation d'un dispositif selon l'invention.

Les figures 8 et 9 sont des vues frontales du barillet fixe et du barillet rotatif représentés sur la figure 7.

La figure 10 est une vue en perspective schématique d'un deuxième mode de réalisation d'un dispositif selon l'invention.

La figure 11 est une représentation géométrique montrant les lignes de balayage d'un chiffre deux.

La figure 12 est une coupe par un plan perpendiculaire à la hauteur des chiffres d'un appareil selon la figure 10.

La figure 13 est un bloc diagramme des composants essentiels d'un lecteur selon les figures 10 à 12 et d'un dispositif de reconnaissance des formes commun à plusieurs lecteurs.

La figure 14 est un bloc diagramme d'une unité centrale sur laquelle sont connectés des dispositifs selon la figure 13.

La figure 15 est une vue en perspective d'un appareil portatif selon l'invention.

La figure 16 est un bloc diagramme représentant les composants essentiels d'un appareil portatif selon la figure 15.

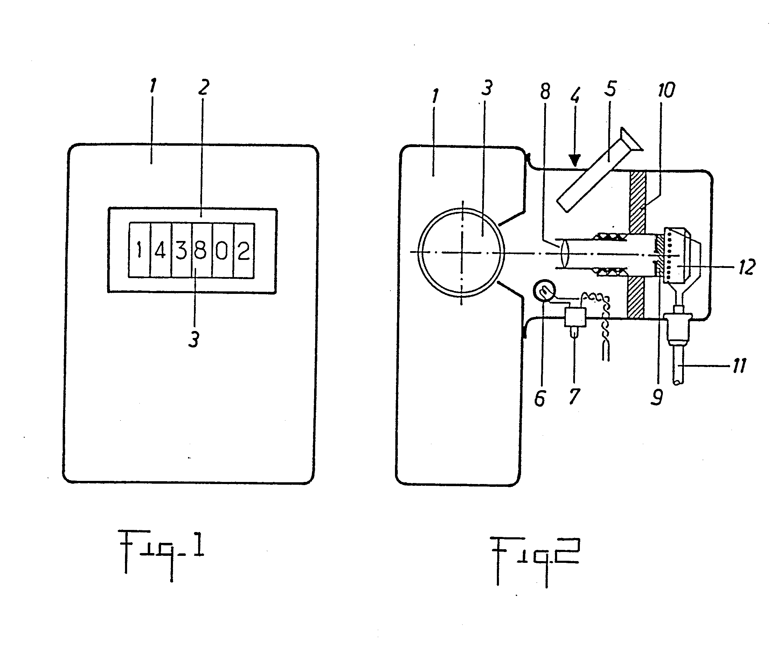

La figure 1 représente un compteur 1, par exemple un compteur de gaz, d'eau ou d'électricité comportant une fenêtre 2, dans laquelle apparaissent des chiffres décimaux affichés par un indicateur numérique 3.

Le compteur 1 peut être équipé de roues qui correspondent chacune à une décade (unités, dizaines, centaines etc...) et qui portent chacune dix chiffres 0 à 9 apparaissant généralement en noir sur un fond blanc. Le compteur 1 peut être également équipé d'un indicateur numérique lumineux, par exemple d'un afficheur à diodes électroluminescentes ou à cristaux liquides.

Dans tous les cas, les chiffres affichés sur l'indicateur se détachent par contraste sur le fond pour être visibles et cette propriété est utilisée dans les dispositifs selon l'invention.

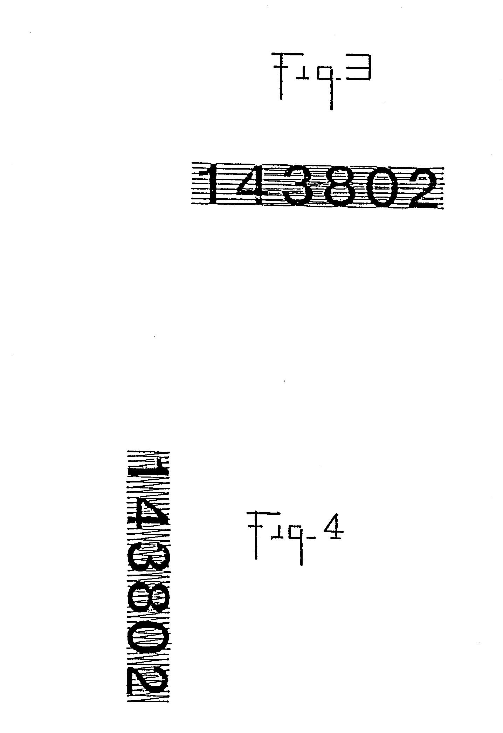

La figure 2 représente une coupe verticale d'un compteur 1 équipé d'un boîtier 4, contenant une partie locale d'un premier mode de réalisation d'un dispositif de télérelevé selon l'invention.

Le boîtier 4 est fixé par tout moyen autour de la fenêtre 2, dans laquelle apparaît l'indicateur numérique 3. Le boîtier 4 comporte un tube optique de visée 5 comportant un oculaire qui permet de lire les chiffres affichés.

Le boîtier 4 contient une lampe d'éclairage 6 qui peut être commandée localement par un bouton-poussoir 7 situé à l'extérieur du boîtier lorsqu'on veut lire localement les chiffres affichés. La lampe 6 peut également être commandée à distance au moment où a lieu le télérelevé du compteur.

Le boîtier 4 contient un dispositif optique 8 qui est placé en regard de l'indicateur numérique 3 et qui forme une image réduite dudit indicateur dans un plan image où se trouve la surface sensible d'un dispositif analyseur d'image 9.

Le tube optique 8 et l'analyseur d'image 9 sont portés par un support rigide 10.

L'analyseur d'image est soit un petit tube cathodique vidéo du type "vidicon", soit une mosaïque de semi-conducteurs formant un circuit intégré de type CCD.

L'analyseur d'image 9 est relié à un câble 11 par un connecteur embrochable 12.

L'ensemble formé par le tube optique 8 et par l'analyseur d'images 9 forme une caméra vidéo simplifiée qui balaye l'image par lignes horizontales successives.

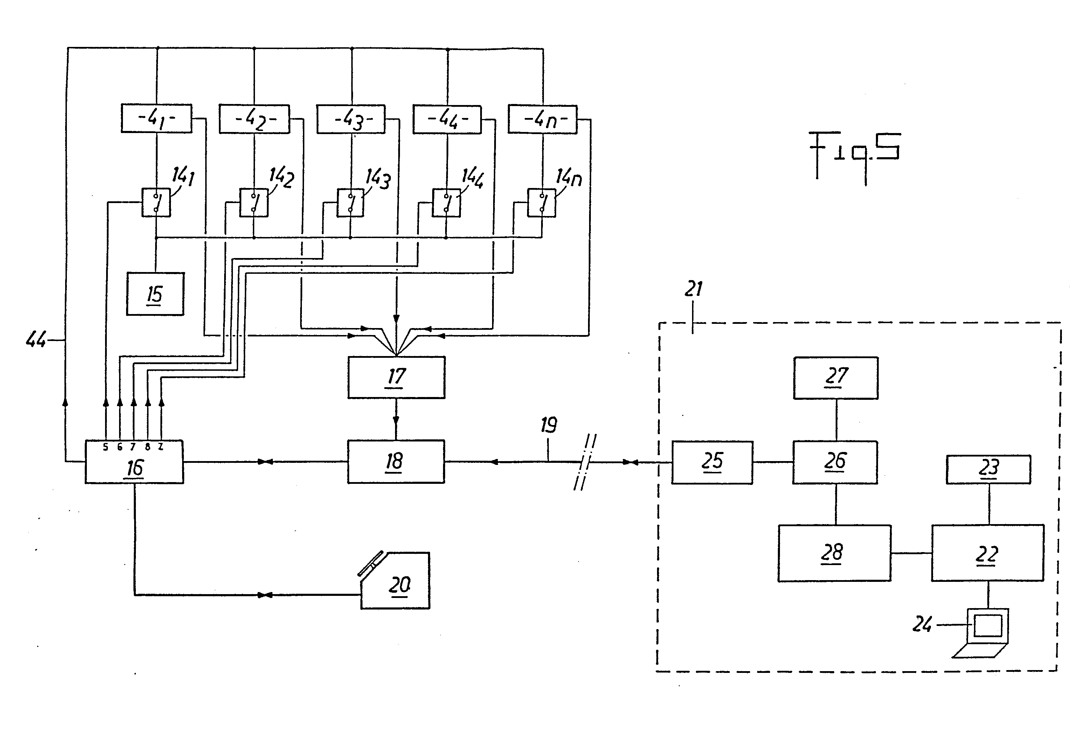

La figure 3 représente un balayage de l'image de l'indicateur numérique dans lequel les lignes de balayage horizontales recoupent les chiffres l'un après l'autre.

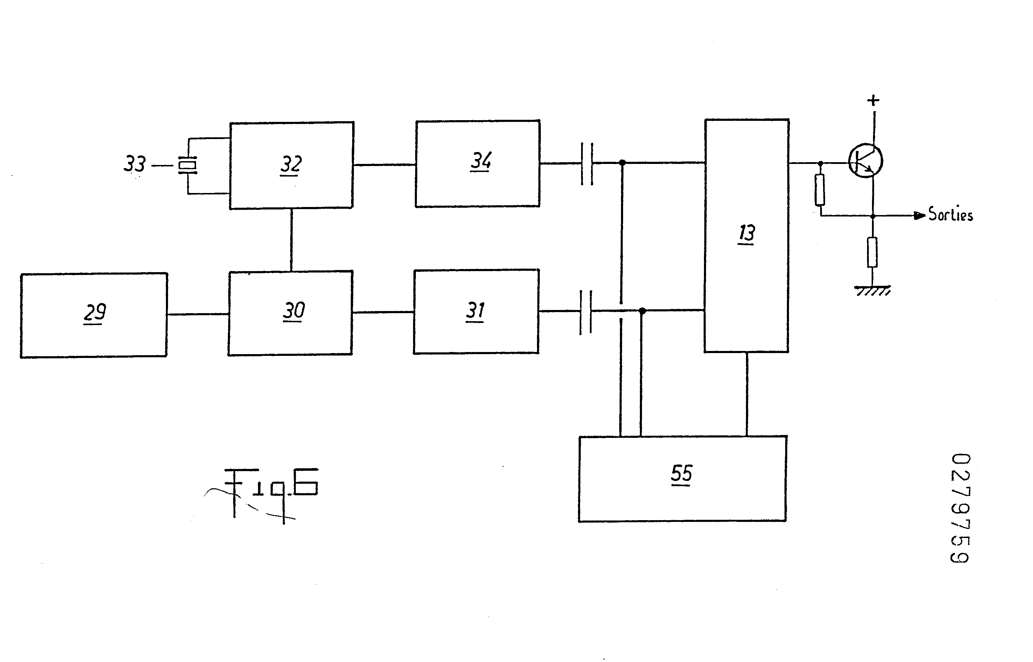

La figure 4 représente un autre mode de réalisation dans lequel chaque ligne de balayage qui est toujours horizontale, est parallèle à la hauteur des chiffres et en recoupe un seul.

Ce deuxième mode de réalisation est préférentiel car il comporte plusieurs lignes situées entre deux chiffres successifs, qui ne recoupent aucun chiffre et qui délivrent donc un signal constamment au même niveau, ce qui permet de séparer facilement les signaux correspondant à chaque chiffre.

On passe du balayage selon la figure 1 au balayage selon la figure 2 en faisant tourner la caméra d'un quart de tour par rapport au compteur.

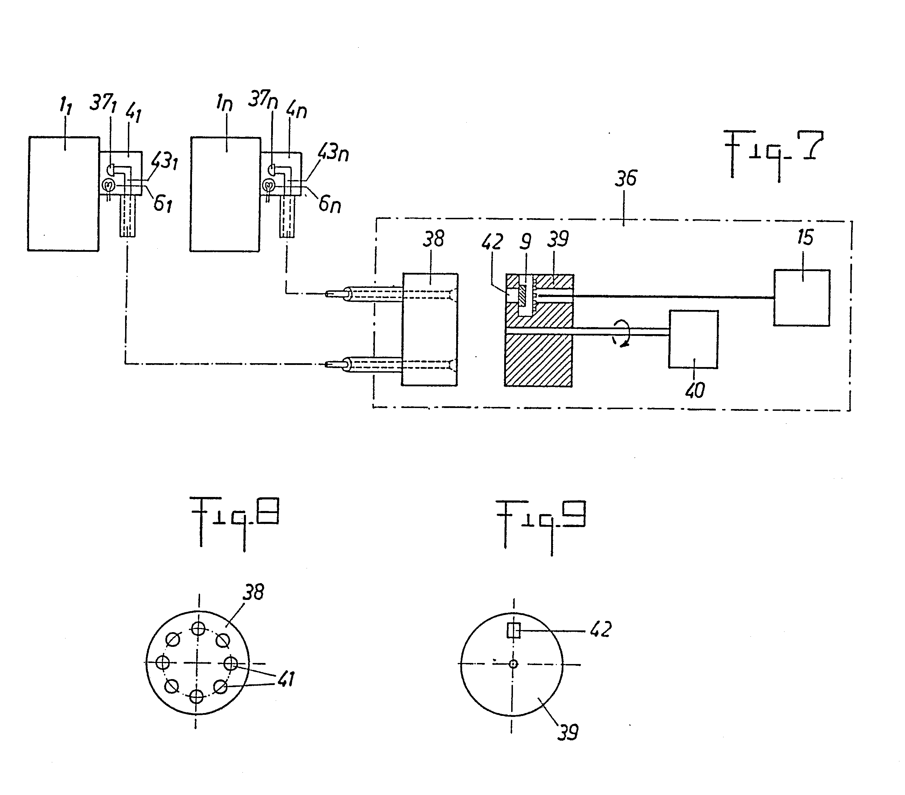

La figure 5 représente schématiquement une partie d'un réseau de télérelevé selon l'invention.

Cette figure 5 représente n boîtiers analyseurs d'image $4_1$ à 4n, qui font partie d'un ensemble et qui équipent par exemple n compteurs placés dans un même immeuble ou à un même étage d'un immeuble.

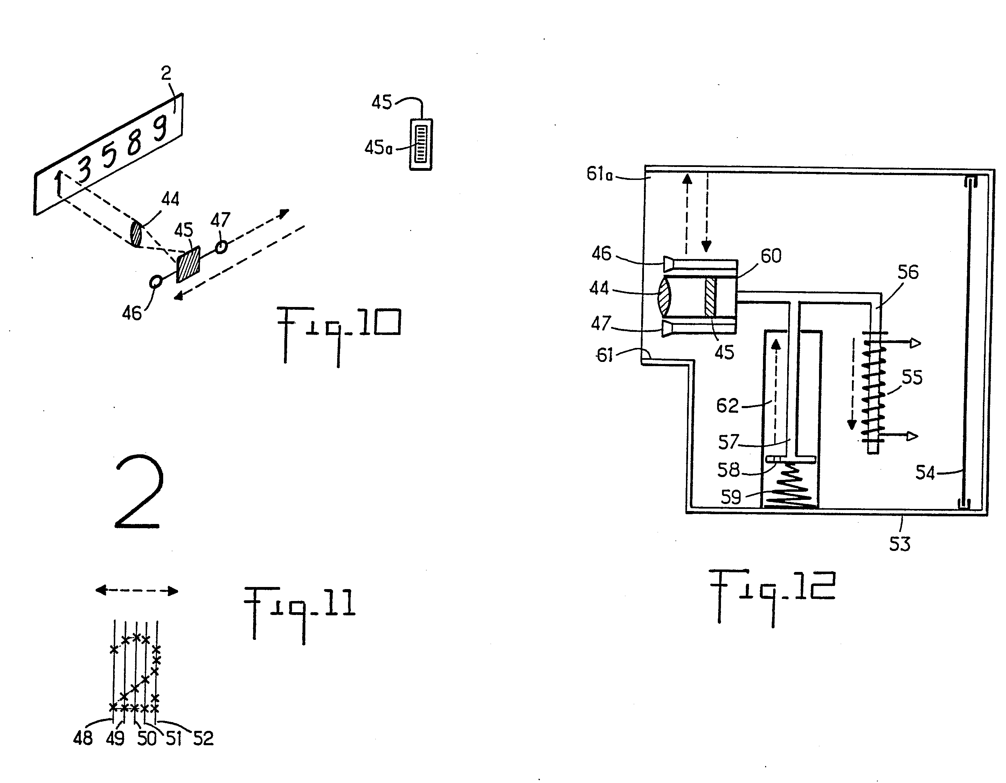

Chaque boîtier analyseur d'image est connecté sur un commutateur, respectivement $14_1$... 14n. Ces commutateurs sont connectés en parallèle sur un coffret 15 qui est représenté plus en détail sur la figure 6 et dont la composition et les fonctions seront expliquées plus loin.

Le dispositif représenté sur la figure 5 comporte un deuxième coffret 16 contenant un équipement de télétransmission.

Les coffrets 15 et 16 peuvent être séparés ou réunis dans une même enceinte.

Le repère 17 représente un codeur numérique, c'est-à-dire un convertisseur analogique à numérique, qui est commun à l'ensemble d'analyseurs d'image $4_1$...4n.

Le codeur 17 reçoit successivement les signaux vidéo émis par chacun des analyseurs d'image $4_1$ à 4n et il convertit ces signaux en valeurs binaires élémentaires.

Comme on l'a expliqué, les chiffres affichés sur les indicateurs numériques, se détachent avec un fort contraste sur un fond plus clair ou plus sombre. Il suffit donc d'échantillonner les signaux vidéo et d'affecter à chaque échantillon du signal appelé couramment pixel une valeur binaire 1 ou 0. Le codeur numérique est donc très simple puisqu'il suffit qu'il comporte un seul élément binaire ou unité d'information binaire (bit).

Le repère 18 représente un "modem", c'est-à-dire un dispositif de conversion des signaux binaires en fréquences audio pouvant être transportées sur les lignes téléphoniques.

Par exemple, les signaux binaires de niveau 0 sont convertis en impulsions de fréquence 980 Hz, tandis que les signaux binaires de niveau 1 sont convertis en impulsions de fréquence 1180 Hz.

Le "modem" 18 et le coffret 16 sont intercalés sur une ligne téléphonique 19 qui aboutit normalement à un poste téléphonique d'abonné 20.

Le rectangle en pointillés 21 représente un poste central qui est équipé d'un ordinateur central 22 relié à une imprimante 23 et à un clavier 24. Le repère 25 représente un "modem" qui reçoit les impulsions de fréquence transmises par la ligne téléphonique et qui convertit celles-ci en signaux binaires compatibles avec l'ordinateur.

Le repère 26 représente un circuit de reconnaissance de forme qui est relié à une mémoire morte (EPROM) 27 dans laquelle sont enregistrées les combinaisons de signaux correspondant à chacun des dix chiffres 0 à 9.

Le circuit de reconnaissance de formes identifie chacun des chiffres décimaux composant un nombre relevé sur un compteur. Pour cela, il sépare les combinaisons de signaux correspondant à chaque chiffre individuel grâce aux lignes montones, c'est-à-dire comportant des signaux tous identiques, qui séparent deux chiffres successifs, puis il compare chaque combinaison de signaux aux combinaisons enregistrées dans la mémoire morte 27 et il identifie le chiffre décimal auquel correspond chaque combinaison. Il transmet l'information à un codeur 28 qui convertit chaque chiffre décimal en un nombre binaire compatible avec l'ordinateur et qui transmet celui-ci à l'ordinateur. L'ordinateur central appelle les lignes téléphoniques les unes après les autres et chaque fois qu'il a obtenu une ligne 19, il appelle successivement tous les analyseurs d'image $4_1$ à 4n connectés sur le même coffret 16.

La figure 6 est un bloc diagramme des circuits et composants contenus dans le coffret 15 de la figure 5.

Le repère 29 représente un oscillateur à fréquence constante qui génère les impulsions de synchronisation des divers analyseurs d'image $4_1$ à 4n.

Le repère 30 représente un diviseur de fréquence qui génère les impulsions de synchronisation d'images. Le repère 31 représente le circuit de balayage vertical qui émet une tension en dents de scie dont les origines sont commandées par les impulsions de synchronisation d'image.

Le repère 32 représente un oscillateur ou un multiplicateur de fréquence stabilisé par un quartz 33, qui émet les impulsions de synchronisation des lignes de balayage de l'image.

Le repère 34 représente le circuit de balayage de ligne qui émet une tension en dents de scie commenant à croître à partir de chaque impulsion de synchronisation d'image.

Le repère 13 représente un des analyseurs d'image $4_1$ à 4n. Le repère 35 représente un ensemble d'alimentation électrique qui est alimenté en courant alternatif et qui comporte un redresseur alimentant une batterie de secours ayant une autonomie de plusieurs heures.

La figure 6 représente un seul analyseur d'images 13 mais les circuits contenus dans un même coffret 15 et 16 alimentent en parallèle plusieurs analyseurs d'image, comme le montre la figure 5.

On notera qu'une seule ligne téléphonique suffit pour relever séquentiellement plusieurs compteurs. Par exemple tous les compteurs d'un même immeuble sont connectés sur un même coffret contenant un seul codeur numérique 17 et un seul "modem" 18.

Le fonctionnement d'un dispositif selon les figures 1 à 6 est le suivant.

L'ordinateur central 22 interroge périodiquement ou à la demande les divers compteurs qui lui sont rattachés.

L'ordinateur compose le numéro de chaque ligne téléphonique telle que la ligne 19. Si la ligne qui reçoit l'appel est libre, l'équipement de télétransmission 16 détecte la sonnerie et il décroche, c'est-à-dire qu'il prend la ligne.

L'ordinateur détecte l'inversion de polarité qui suit le décrochement et il envoie une adresse qui correspond à celle du dispositif de télétransmission 16 branché sur la ligne.

Si dans un délai de deux secondes après le décrochement le dispositif de télétransmission 16 n'a pas reçu une adresse qui correspond à la sienne, il rétablit la liaison avec le poste téléphonique 20 et il émet des impulsions de sonnerie pour indiquer à l'abonné que quelqu'un l'appelle.

Dans ce cas, le correspondant qui appelle n'a pas le temps de s'apercevoir que l'appareil est resté décroché pendant deux secondes.

Si l'équipement de télétransmission 16 reçoit une adresse qui correspond à la sienne dans les deux secondes qui suivent un décrochement, il déclenche le fonctionnement de l'ensemble de télérelevé qui lui est rattaché.

Il allume d'abord simultanément les lampes 6 de tous les boîtiers par la ligne 44 qui est connectée en parallèle sur toutes les lampes 6.

Il commande ensuite un circuit multiplexeur qui est représenté schématiquement sur la figure 5 par un ensemble de commutateurs $14_1$ à $14_n$, de sorte que chacun des analyseurs d'image $4_1$ à $4_n$ est mis à son tour en liaison avec les circuits de synchronisation contenus dans le coffret 15 et émet à son tour un signal vidéo vers le codeur numérique 17.

L'analyse des images des chiffres décimaux peut être réalisée par un balayage horizontal normal, parallèle aux lignes horizontales entre lesquelles les chiffres sont inscrits comme cela est représenté sur la figure 3. Mais dans ce cas, le logiciel de reconnaissance des formes est complexe du fait que chaque ligne de balayage recoupe tous les chiffres.

Le procédé préférentiel d'analyse des images des chiffres est celui qui est représenté sur la figure 4.

Les lignes de balayage sont disposées suivant la hauteur des chiffres, ce qui présente plusieurs avantages.

Chaque ligne peut avoir une amplitude réduite, par exemple une amplitude correspondant à cinquante points ou pixels. De plus, les chiffres sont balayés individuellement, les uns après les autres. On peut utiliser par exemple sept à dix lignes par chiffre. Un certain nombre de lignes sont comprises entre deux chiffres successifs par exemples trois à cinq lignes. Ces lignes ne rencontrant aucun changement de luminosité, sont uniformes, c'est-à-dire que le signal vidéo délivré par l'analyseur reste au même niveau pendant tout le balayage de ces lignes.

Les chiffres affichés sur l'indicateur numérique se détachent sur le fond. Par exemple, les chiffres apparaissent en blanc sur un fond noir ou inversement.

Il suffit donc d'affecter un niveau logique 0 au fond et un niveau logique 1 aux points situés sur un chiffre (ou inversement).

La transformation effectuée par le codeur 17 est donc très simple. Celui-ci affecte un niveau 0 à tous les points situés sur le fond et un niveau 1 à tous les points situés sur un chiffre (ou inversement). Un seuil différenciant les niveaux 0 et 1 est mis en mémoire dans le codeur 17. Entre deux chiffres successifs, le codeur émet une succession de signaux binaires qui sont tous au même niveau.

Si chaque ligne comporte cinquante points, le circuit de reconnaissance de forme est programmé pour commencer les comparaisons lorsqu'il a compté un nombre déterminé de points successifs au même niveau par exemple lorsqu'il a compté une suite de cent points au même niveau correspondant à deux lignes uniformes.

Supposons par exemple que les chiffres se détachent en blanc sur fond noir, que l'on affecte le niveau 1 au blanc, que le balayage des chiffres comporte sept lignes par chiffre et trois lignes entre deux chiffres successifs et que chaque ligne comporte cinquante points. Le chiffre 1 par exemple, correspondra à douze points blancs, soit douze unités binaires au niveau 1 et à 338 points noirs.

On peut faire un contrôle de parité sur les signaux binaires de poids 1 et sur les signaux binaires de poids 0 en rajoutant deux signaux binaires de parité aux 350 signaux binaires de codage de chaque chiffre.

Les signaux binaires émis par le codeur numérique entrent directement sur un circuit d'interface série asynchrone équipant le "modem" 17 par exemple une interface désignée RS 232.

Les impulsions de fréquence émises par le "modem" local 17 sont transmises par la ligne téléphonique 19 au "modem" 25 du poste central. Celui-ci décode les informations reçues, c'est-à-dire qu'il les transforme en signaux binaires qui reproduisent les signaux sortant du codeur 17.

Le poste central contrôle que la parité du nombre de signaux binaires au niveau 0 et au niveau 1 est bien conforme aux signaux de contrôle de parité pour chaque chiffre.

S'il y a bien conformité, il retire les signaux de contrôle de parité et il fournit l'information binaire correspondant à chaque chiffre au circuit de reconnaissance des formes 26.

La mémoire morte 27 comporte dix séries ou combinaisons de signaux binaires qui correspondent aux dix chiffres 0 à 1 et qui ont été codés avec un dispsoitif d'analyse d'image identique, placé devant un indicateur numérique identique (même taille et forme des chiffres, même couleur des chiffres et du fond, même écartement entre chiffres, même positionnement de l'optique par rapport à l'indicateur numérique).

On peut évidemment mettre en mémoire plusieurs séries de combinaisons binaires correspondant à des compteurs ou à des indicateurs numériques ayant des formats de chiffres, des dimensions ou des contrastes de luminosité différents. Dans ce cas, chaque catégorie mise en mémoire est identifiée par un préfixe d'adresse propre à cette catégorie et le message transmis par chaque équipement de lecture local comporte un code d'adresse de chaque compteur qui permet d'identifier le lieu d'implantation et le client et une information codée qui caractérise le type de compteur et donc la catégorie dans laquelle se situent les chiffres lus sur le compteur et le circuit de reconnaissance de formes 26 choisit la mémoire 27 qui correspond à cette catégorie.

Le circuit 26 compare l'un après l'autre chaque combinaison de signaux binaires, correspondant à un chiffre affiché, aux dix combinaisons binaires contenues dans la mémoire pour la même catégorie de compteurs et il identifie le chiffre décimal lu sur le compteur.

Une fois tous les chiffres décimaux d'un compteur reconnus, le circuit 26 transmet le nombre décimal au circuit 28 qui est un codeur décimal-binaire qui transforme ce nombre en une information binaire dans un code lisible par l'ordinateur central.

L'ordinateur central enregistre dans sa mémoire le nombre décimal lu sur chaque compteur. Cette information peut être reproduite par une imprimante 23 qui édite des factures ou pourra être affichée sur un écran.

L'ordinateur central est programmé pour interroger périodiquement et cycliquement tous les compteurs qui lui sont rattachés. Le centre comporte un terminal 24 muni d'un clavier qui permet à un opérateur de relever à distance tel ou tel compteur si cela est nécessaire.

Le fonctionnement du réseau de télétransmission est le suivant.

On suppose que la ligne téléphonique 19 fait partie d'un réseau autocommuté.

L'équipement de relevé local est intercalé en permanence entre la ligne et le poste de l'abonné. C'est donc cet équipement qui reçoit tous les trains de sonnerie, même ceux qui sont destinés à appeler l'abonné.

Lorsqu'il détecte une sonnerie, l'équipement local décroche, c'est-à-dire qu'il prend la ligne.

Si c'est bien l'ordinateur central qui l'a appelé, il reçoit dans les deux secondes qui suivent le décrochement un code d'adresse qui lui est propre. Il conserve la ligne et un cycle de relevé de tous les compteurs gérés par l'équipement se déroule automatiquement comme on l'a expliqué.

On remarquera que ces opérations ont lieu sans que l'abonné ne soit perturbé et sans qu'il se rende compte que sa ligne est occupée.

Avantageusement, les relevés de compteurs auront lieu pendant la nuit.

Si dans les deux secondes qui suivent le décrochement l'équipement local n'a pas reçu le code d'adresse qui lui est propre, il transfère la ligne vers le poste d'abonné et il génère des trains de sonnerie pour remplacer les sonneries provenant du demandeur qui ont cessé au moment du décrochement.

Les figures 2 et 5 représentent un mode de réalisation dans lequel, pour des raisons d'encombrement, on installe dans le boîtier 4 fixé sur chaque compteur uniquement le dispositif d'analyse d'image et l'optique qui lui est associée et on regroupe un dispositif d'alimentation électrique et un ensemble de traitement des signaux ainsi que la partie télétransmission locale communs à plusieurs compteurs dans un ou plusieurs coffrets ou armoires locales représentées par les repères 15, 16, 17 et 18 sur la figure 5.

Dans ce cas, les liaisons entre le coffret commun et les divers compteurs sont établies séquentiellement par un multiplexeur situé dans l'armoire commune. Le logiciel du système de télétransmission est établi pour effectuer un traitement séquentiel des différentes voies connectées à un même équipement local.

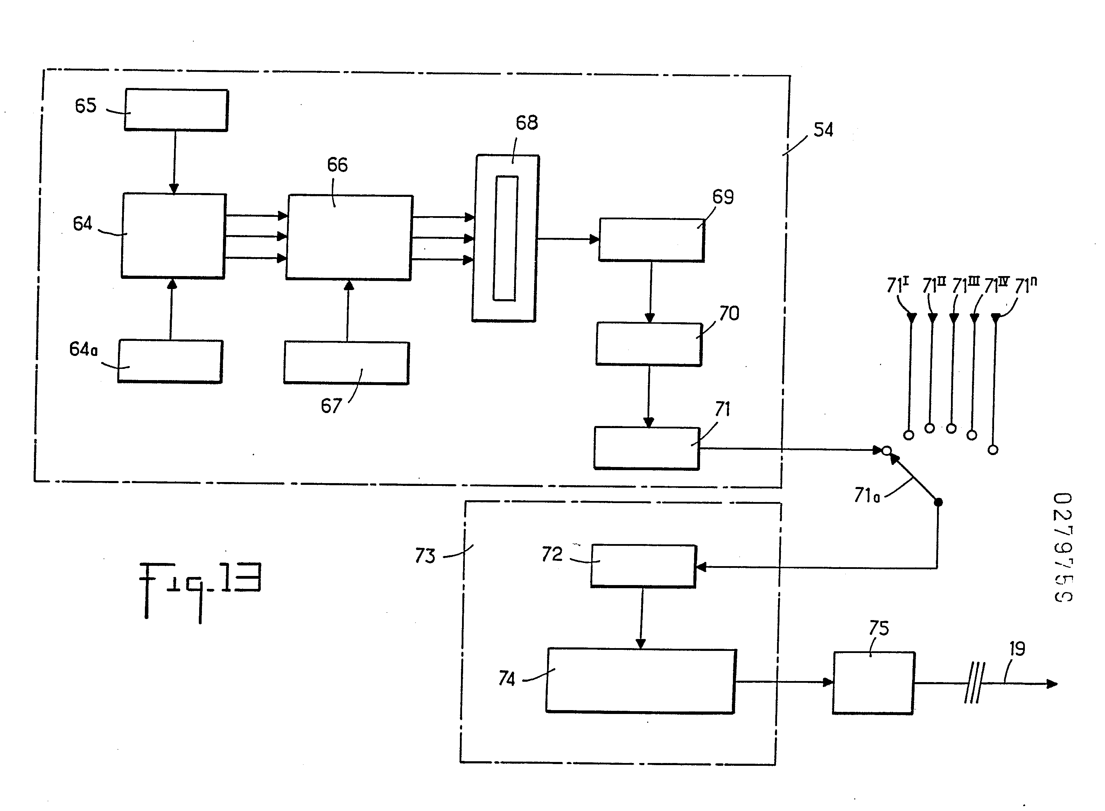

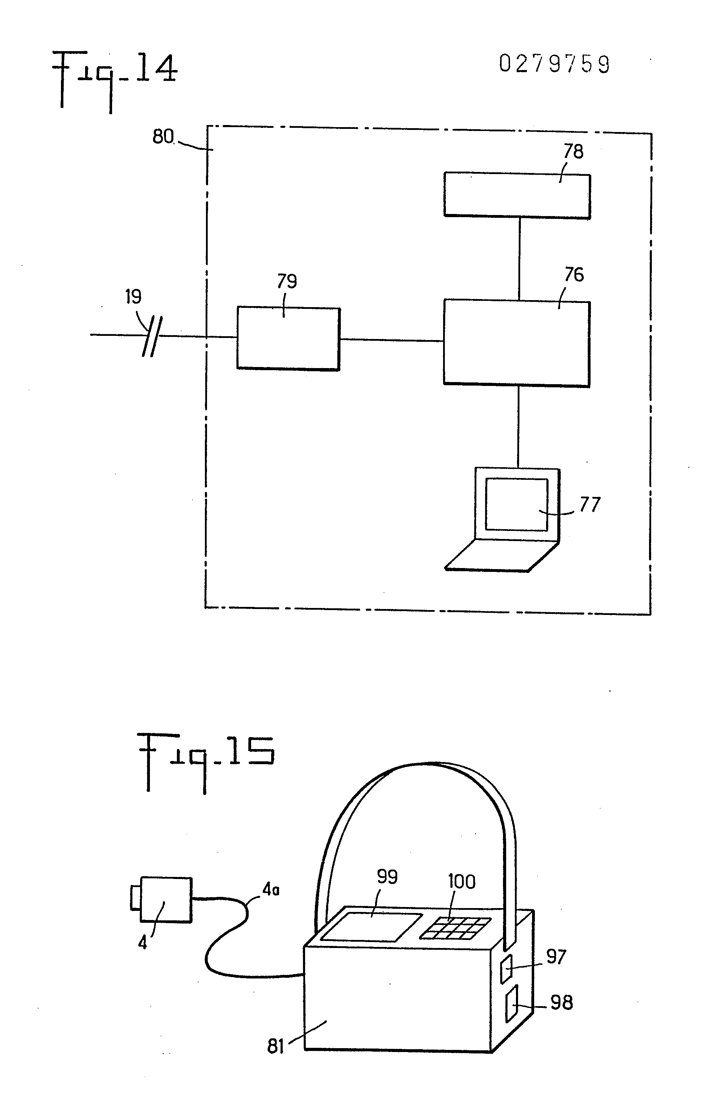

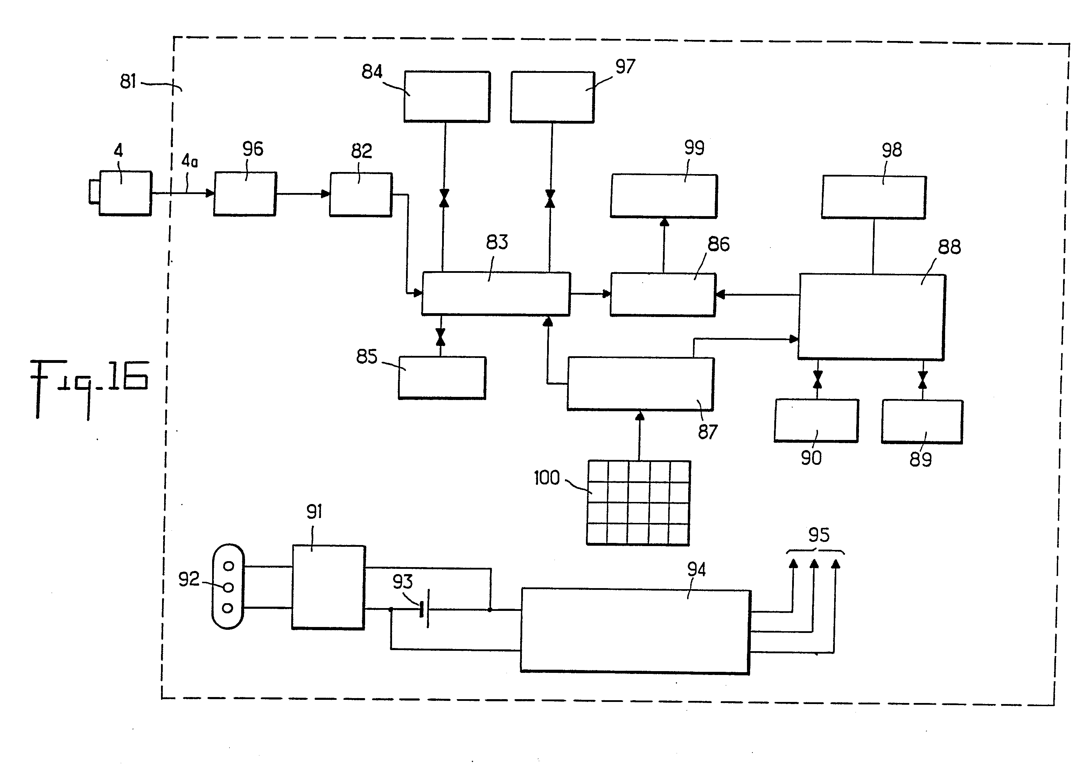

Les figures 7, 8 et 9 représentent un autre mode de réalisation d'un dispositif selon l'invention. Les parties homologues sont représentées par les mêmes repères sur les figures 2, 5 et 7.

On retrouve sur la figure 7 plusieurs compteurs $1_1$ à $1n$, qui sont équipés chacun d'un boîtier $4_1$ à $4n$ fixé en regard de la fenêtre dans laquelle apparaissent les chiffres de l'indicateur numérique du compteur.

Dans ce mode de réalisation, chaque boîtier $4_1$ à $4n$ contient uniquement une lampe $6_1$ à $6n$ qui éclaire l'indicateur lumineux et une extrémité d'un groupement de fibres optiques $43_1$ à $43n$ qui relie le boîtier à une armoire commune 36 représentée en traits mixtes.

Les extrémités des groupements de fibres optiques placées dans les boîtiers $4_1$ à $4n$ comportent chacune une optique très simple $37_1$ à $37n$ qui est disposée en regard de l'indicateur numérique et qui transmet à l'intérieur des fibres optiques constituant un groupement une image réduite des chiffres affichés.

Les extrémités 41 des groupements de fibres optiques situées dans l'armoire 36 sont disposées sur un barillet circulaire fixe 38 qui est vu de face sur la figure 8 qui représente un exemple où l'on regroupe huit compteurs sur une même armoire 36.

Les extrémités 41 sont réparties uniformément sur un cercle concentrique avec le barillet.

L'armoire 36 contient un barillet circulaire 39 qui est coaxial avec le barillet fixe 38 et qui est entraîné en rotation par un moteur pas à pas 40, chaque pas correspondant à l'écart angulaire entre les extrémités successives 41 de deux groupements de fibres optiques sur le barillet fixe soit 50 grades dans le cas de la figure.

Le barillet 39 comporte un logement 42 qui est situé à une distance de l'axe de rotation égale au rayon du cercle portant les extrémités 41 des fibres optiques. Ce logement 42 contient un analyseur électronique d'image 9 qui vient se positionner en face de chacune des extrémités d'un groupement de fibres 41 lorsque le barillet 39 est entraîné en rotation.

Le moteur pas à pas est commandé automatiquement par l'équipement de télétransmission 16 non représenté sur cette figure.

Le repère 15 représente les circuits de synchronisation de l'analyseur d'images.

Les extrémités 41 des groupements de fibres optiques sont équipées d'une optique qui projette l'image sur la surface sensible de l'analyseur d'images et qui la dilate à l'échelle de cette surface sensible.

Le procédé de l'invention permet de relever à distance des compteurs en utilisant la reconnaissance des formes des chiffres décimaux, ce qui présente l'avantage que l'on part toujours du chiffre affiché sur le compteur d'où une très grande fiabilité.

Le procédé selon l'invention permet de transformer localement les chiffres en signaux binaires, de façon simple et économique et de transmettre ensuite les signaux binaires sur des lignes téléphoniques, ce qui permet donc de faire des relevés à distance en utilisant les lignes du réseau téléphonique pendant les périodes où elles sont inoccupées, sans apporter aucune gêne aux abonnés.

On pourrait évidemment faire appel à des méthodes connues d'analyse et de numérisation des images.

On pourrait par exemple numériser le signal analogique vidéo en le codant sur huit bits.

Au central recevant les informations binaires, on pourrait reconstituer l'image sur un écran de télévision et disposer en face de cet écran un dispositif de reconnaissance de formes habituel couplé à un ordinateur, qui enregistrerait en mémoire les chiffres reconnus sous forme binaire et qui pourrait également traiter ces chiffres, les imprimer, les afficher sur un écran, établir des factures etc.....

Les figures 10 à 12 représentent un autre mode de réalisation d'un équipement selon l'invention dans lequel on utilise non plus un analyseur d'images de type CCD matriciel, mais un analyseur d'images linéaire 45 de type CCD, plus simple et moins onéreux, qui comporte une seule colonne d'éléments 45a qui transforment analogiquement l'intensité lumineuse reçue en courant électrique et des moyens électroniques assurant le balayage de cette colonne.

La figure 10 représente la fenêtre 2 d'un indicateur numérique qui affiche des chiffres décimaux par exemple les chiffres 13589.

On déplace horizontalement alternativement de gauche à droite, puis de droite à gauche, en face de la fenêtre 2, un analyseur d'images 45 associé à un objectif 44 qui forme une image des chiffres décimaux dans le plan image où se situe l'analyseur 45.

On a représenté schématiquement sur la droite de la figure 10 l'analyseur d'images 45 comportant une rangée verticale d'éléments sensibles 45a.

L'analyseur et l'objectif sont fixés sur une même monture et sont déplacés simultanément à une vitesse permettant l'analyse des différents points de l'image qui sont situés sur une série de droites verticales et qui définissent chaque chiffre décimal et le distinguent du fond sur lequel il se détache.

La figure 11 représente à titre d'exemple le chiffre 2 qui se détache sur un fond blanc et plusieurs lignes de balayage vertical 48 à 52 qui correspondent chacune à une position déterminée de l'analyseur d'images 45 qui comporte par exemple 50 pixels c'est-à-dire une colonne de 50 éléments de conversion.

Lors du balayage de la ligne 48, deux des pixels se trouvent sur le chiffre 2 et délivrent un signal électrique qui sera converti en un niveau binaire 1, les autres pixels délivrant un signal qui sera converti en un niveau binaire 0.

Lors du balayage de la ligne 52, cinq des pixels délivrent un signal électrique qui est converti en un niveau binaire 1, tandis que tous les autres pixels délivrent un signal qui est converti en un niveau binaire 0.

Le balayage vertical de chaque ligne, à mesure que l'analyseur d'images se déplace à vitesse constante, donne donc, après codage binaire, une combinaison de signaux binaires 1 et 0 qui est spécifique de chaque chiffre décimal et dont le décodage permet d'identifier ce chiffre.

La figure 10 représente deux diodes électroluminescentes 46, 47, qui sont placées de part et d'autre de l'analyseur d'images.

La figure 12 est une coupe horizontale d'un boîtier 53 qui est placé devant un indicateur ou un compteur pour lire les chiffres décimaux affichés sur celui-ci. On retrouve sur cette figure l'objectif 44, l'analyseur d'images linéaire 45 et les diodes électroluminescentes 46, 47 qui sont montés sur un même support 60 déplaçable horizontalement à l'intérieur du boîtier 53.

Le boîtier 53 contient une carte électronique 54 qui porte les circuits et composants qui transforment les sinaux vidéo émis par l'analyseur d'images en signaux binaires.

Le support mobile 60 est fixé sur un équipage mobile 56 solidaire d'un noyau de fer doux qui plonge dans une bobine horizontale 55, alimentée en courant continu.

L'équipage mobile est solidaire d'un piston 57 qui porte un ou plusieurs orifices calibrés 58 et qui se déplace à l'intéireur d'une enceinte étanche 62 qui est remplie d'huile. L'enceinte 62 contient un ressort 59 qui est comprimé par le piston 57 lorsque la bobine attire le noyau plongeur.

Le ressort 59 est calculé de telle sorte que la force de répulsion qu'il exerce sur le piston et qui croît à mesure que le ressort se comprime soit légèrement inférieure à la force d'attraction exercée par la bobine sur le noyau en fer doux, de sorte que la vitesse de déplacement du support mobile soit sensiblement constante.

L'enceinte 62 contenant le piston perforé 57 et de l'huile sert d'amortisseur et évite des variations brutales de vitesse de l'équipage mobile.

Les organes généraux (figure 13) commande l'alimentation de la bobine 55 qui déplace l'équipage mobile pendant la phase d'analyse des chiffres. Lorsque le support mobile arrive en fin de course, contre la butée 61, la bobine 55 n'est plus alimentée et le ressort 59 provoque le retour du support mobile 60 à son point de départ 61a. L'amortisseur à huile 62 permet d'éviter un retour trop brutal.

La figure 13 est un schéma des circuits et composants essentiels du circuit imprimé 54. Ceux-ci comportent une horloge électronique 65 qui alimente en impulsions un circuit de mise en forme 64.

Les signaux en créneaux émis par le circuit 64 sont contrôlés par un circuit 64a qui détermine la durée des impulsions pour que celle-ci soit suffisante pour correspondre au temps d'expostion des pixels de l'analyseur CCD 68.

Le repère 66 représente un diviseur de fréquence qui délivre trois fréquences différentes qui commandent le balayage de l'analyseur CCD 68.

Le repère 67 représente un circuit qui délivre trois tensions différentes qui déterminent les trois fréquences délivrées par le circuit 66.

Le repère 69 représente un filtre qui reçoit les signaux vidéo émis par l'analyseur 68 et qui les débarrasse de leur composante continue. Le repère 70 représente un amplificateur.

Le repère 71 représente un codeur binaire qui compare les signaux vidéo à un seuil et qui les transforme en signaux binaires de niveau 1 ou 0 selon qu'ils sont supérieurs ou inférieurs audit seuil.

Le repère 73 représente des circuits communs à plusieurs coffrets 53 dans le cas où, par exemple, on doit relever plusieurs compteurs situés dans un même immeuble en affectant un coffret 53 à chaque compteur.

Le repère 71a représente schématiquement un commutateur qui balaye plusieurs bornes connectées respectivement aux codeurs binaires 71, $71_1$, $71_2$ ..71n de plusieurs coffrets.

Le repère 72 représente un multiplexeur.

Le repère 74 représente une unité centrale pourvue d'un microprocesseur et d'une mémoire vive (RAM) dans laquelle les signaux binaires provenant des différents coffrets sont stockés.

L'unité centrale comporte une mémoire dans laquelle sont stockées les combinaisons de signaux binaires correspondant à chaque chiffre décimal. Un logiciel stocké dans une mémoire REPROM commande les opérations logiques qui comparent chaque combinaison de signaux binaires provenant d'un codeur 71 pendant la lecture d'un chiffre décimal aux combinaisons enregistrées et qui effectue ainsi la reconnaissance de forme particulière à chaque chiffre et l'identification de chaque chiffre décimal.

Après identification d'un chiffre décimal, l'unité centrale 74 le convertit en un code binaire, par exemple en code ASCII. Un circuit d'interface parallèle-série relie la sortie de l'unité centrale 74 à un modulateur-démodulateur (modem) 75 qui est relié par une ligne téléphonique 19 à un poste central qui peut interroger successivement plusieurs ensembles locaux 73, selon la description qui a été donnée en référence à la figure 5, le modem 75 de la figure 13 remplissant la même fonction que le modem 18 de la figure 5.

La figure 14 représente schématiquement un poste central 80, destiné à être utilisé avec les circuits représentés sur la figure 13.

L'équipement du poste 80 est différent de l'équipement du poste central 21 de la figure 5, du fait que la reconnaissance de forme des chiffres décimaux et la conversion de ceux-ci en code binaire, par exemple en code ASCII, est obtenue dans les coffrets locaux 73 et n'a plus à être réalisée au poste central. Dans ce cas, le poste central 80 comporte seulement un ordinateur central 76 équipé d'une console à écran 77, d'un organe d'entrée à clavier 78 et d'un modulateur-démodulateur 79.

L'ordinateur central 76 est programmé pour traiter les données numériques relevées sur les compteurs, notamment pour calculer les consommations et pour établir les factures.

Le fait d'utiliser des coffrets locaux 73 qui effectuent la reconnaissance de forme des chiffres décimaux et la conversion de ceux-ci en code binaire ASCII permet de transmettre entre les deux modems 75-79, un nombre d'unités d'informations binaires plus réduit avec beaucoup moins de risques d'erreur et une durée de transmission beaucoup plus courte. Cette méthode peut être utilisée avec le dispositif représenté sur la figure 2 avec un analyseur d'image CCD matriciel.

Les figures 15 et 16 représente schématiquement un autre appareil mettant en oeuvre le procédé de lecture des chiffres décimaux selon l'invention.

Dans certains cas, il est difficile de pratiquer un relevé à distance des compteurs numériques transmettant les chiffres relevés par des lignes de télécommunication.

La situation difficile des compteurs, le degré de développement des lignes de télécommunication, le prix des installations peuvent s'opposer à l'utilisation d'un relevé à distance.

Les figures 15 et 16 représentent un dispositif portatif qui permet à un opérateur de lire les chiffres décimaux affichés sur un indicateur numérique ou sur un compteur et de les enregistrer pour les rentrer à la fin de sa tournée dans un ordinateur central programmé pour les traiter.

La figure 15 représente un boîtier portatif 81 qui est un terminal d'ordinateur portatif relié par un conducteur électrique 4a à une caméra vidéo portative ou à un analyseur d'images CCD 4, qui est par exemple analogue à l'analyseur 4 représenté sur la figure 2, mais la lunette de visée 5 est supprimée.

L'opérateur place l'analyseur d'images 4 devant l'afficheur numérique à relever et les signaux vidéo sont transmis par le câble 4a à l'intérieur du boîtier portatif 81.

La société qui exploite un réseau sur lequel se trouvent des compteurs d'abonnés qui doivent être relevés périodiquement utilise un ordinateur central dans lequel les noms, les adresses et les numéros des abonnés, ainsi que les derniers relevés et leur date sont enregistrés. Cet ordinateur est programmé pour traiter les chiffres relevés sur les compteurs, pour calculer les consommations, pour établir les factures et pour enregistrer le nouveau relevé et la date de celui-ci.

Avant de partir en tournée, l'opérateur branche la prise d'entrée sortie de données 98 de son appareil portatif à la prise correspondante de l'ordinateur central. Il détermine l'ordre dans lequel il envisage de relever les compteurs. Il tape sur le clavier de l'ordinateur les noms des abonnés dans l'ordre choisi. L'ordinateur entre dans la mémoire du terminal portatif 81 le nom, l'adresse, éventuellement le numéro de chaque abonné et le chiffre lu lors du dernier relevé.

L'appareil portatif 81 comporte un afficheur lumineux 99 et un clavier numérique 100.

L'opérateur relève les compteurs en suivant l'ordre dans lequel il a inscrit les abonnés. Arrivé au premier compteur, il frappe sur le clavier 100 le chiffre 1 et l'appareil affiche sur l'écran 99 le nom et l'adresse du premier abonné et le dernier relevé. Après avoir vérifié que ces indications correspondent bien au compteur, l'opérateur place sa caméra devant la fenêtre du compteur en respectant un positionnnement indiqué par des flèches dessinées sur le boîtier de la caméra 4.

Il actionne une ou plusieurs touches du clavier et l'appareil affiche alors sur l'écran 99 le nouveau relevé.

L'opérateur vérifie que les chiffres apparaissant sur l'écran 99 correspondent bien à ceux qu'il lit sur le compteur. Si c'est le cas, il appuie sur une touche de validation et les chiffres relevés sont enregistrés dans la mémoire de l'appareil portatif 81.

Le préposé relève ainsi les compteurs de tous les abonnés qu'il a inscrit dans son appareil portatif avant de partir en tournée. De retour au poste central, une prise entrée/sortie série asynchrone 97 équipant l'appareil portatif est connectée à la prise correspondante de l'ordinateur et l'opérateur transfère dans la mémoire de l'ordinateur les chiffres relevés correspondant à chaque client. La procédure de dialogue entre le terminal portatif 81 et l'ordinateur central est commandée par un logiciel de dialogue enregistré dans l'ordinateur central.

La figure 16 représente schématiquement les circuits et les composants essentiels qui composent l'appareil portatif 81. Cet appareil comporte une carte électronique 96 qui est reliée par le conducteur 4a à la caméra 4. La carte électronique 96 comporte des circuits analogues à ceux qui sont représentés sur la figure 6 et elle remplit les mêmes fonctions.

La sortie de l'analyseur CCD matriciel contenu sur cette carte, qui est l'équivalent de l'analyseur 13 de la figure 6 est connectée à un convertisseur analogique/numérique 82 qui code en binaire le signal délivré par chaque pixel de l'analyseur.

Le repère 83 représente un processeur central qui est associé à une mémoire vive 84 qui stocke les informations binaires pendant leur traitement.

Le repère 85 représente une mémoire morte effaçable et reprogrammable (REPROM) qui contient un logiciel permettant la reconnaissance de forme des chiffres décimaux par comparaison, avec des combinaisons enregistrées, des combinaisons des signaux binaires provenant de l'analyse de chaque chiffre décimal lu sur le compteur relevé.

La mémoire 85 contient, en outre, un logiciel qui effectue le codage en code binaire ASCII de chacun des chiffres décimaux lus sur le compteur et qui stocke les nombres binaires correspondants dans la mémoire vive 84.

Une interface sortie série asynchrone 97, reliée au processeur central 83, permet de transférer dans un ordinateur central à la fin d'une tournée, les données binaires enregistrées dans la mémoire 84.

Un clavier 100 est relié au processeur central 83 par une interface 87. De même, un écran 99 est relié au processeur central 83 par une interface 86.

Le boîtier 81 contient, en outre, une mémoire vive 89 qui est connectée à un microprocesseur 88 qui est également connecté à une mémoire morte 90 effaçable et reprogrammable (REPROM), dans laquelle est enregistré un logiciel participant au dialogue avec un ordinateur central.

Le microprocesseur 88 est connecté sur la prise entrée/sortie 98.

Avant de partir en tournée, l'opérateur se connecte par la prise 98 à l'ordinateur central et le programme stocké dans la mémoire 90 commande le transfert dans la mémoire 89 des données correspondant aux clients dont les noms ou les numéros d'abonnés sont appelés sur le clavier 100.

Le repère 91 représente un chargeur de batterie qui est connecté par une prise 92 à un réseau de distribution de courant alternatif et qui charge une batterie 93.

Le repère 94 représente une carte électronique qui porte des moyens connus permettant de fournir sur des bornes 95 l'ensemble des tensions continues nécessaires à l'alimentation de tous les composants électroniques contenus dans le boîtier 81.

## Revendications

1. Procédé pour relever des chiffres décimaux, notamment des chiffres affichés par un indicateur numérique, par exemple par un compteur (1), caractérisé par les opérations suivantes :

- au moyen d'un dispositif optique (8), on forme sur la surface sensible d'un analyseur d'images (9) une image desdits chiffres décimaux;

- on convertit localement les signaux vidéo délivrés par ledit analyseur d'images (9) en signaux binaires au moyen d'un codeur binaire (17);

- on entre lesdits signaux binaires dans un dispositif de reconnnaissance de forme comportant un processeur qui est programmé pour comparer chaque combinaison de signaux binaires correspondant à chacun des chiffres décimaux avec un ensemble de dix combinaisons de signaux binaires enregistrées dans une mémoire correspondant chacune à l'un des dix chiffres décimaux afin d'identifier l'un après l'autre chaque chiffre décimal;

- on convertit chaque chiffre décimal en un nombre binaire;

- et on traite lesdits nombres binaires dans un ordinateur central.

2. Procédé selon la revendication 1, caractérisé en ce que les lignes de balayage dudit analyseur d'images sont disposées dans le sens de la hauteur des chiffres affichés, de telle sorte que chaque ligne recoupe un seul chiffre et que deux chiffres successifs sont séparés pas plusieurs lignes.

3. Dispositif pour relever des chiffres décimaux, notamment des chiffres affichés par un indicateur numérique équipant un compteur, caractérisé en ce qu'il comporte :

- d'une part, un ou plusieurs dispositifs locaux de lecture et de conversion desdits chiffres qui comportent un ou plusieurs dispositifs optiques (8) qui peuvent être placés en regard desdits chiffres, un ou plusieurs analyseurs d'images électroniques (9), dont la surface sensible est disposée dans le plan image d'un dispositif optique (8) et un codeur numérique (17) qui reçoit séquentiellement les signaux vidéo délivrés par un ou plusieurs analyseurs d'image (9) et qui convertit ces signaux vidéo en signaux binaires;

- d'autre part, un microprocesseur qui comporte une mémoire dans laquelle sont enregistrés un ou plusieurs ensembles de combinaisons de signaux binaires correspondant à chacun des chiffres décimaux et qui est programmé pour comparer chaque combinaison de signaux binaires délivrée par ledit codeur numérique aux combinaisons enregistrées afin d'identifier chacun des chiffres décimaux, puis pour convertir chaque chiffre décimal en un nombre binaire et pour enregistrer lesdits nombres binaires;

- et un ordinateur central qui est programmé pour traiter lesdits nombres binaires.

4. Dispositif selon la revendication 3, caractérisé en ce que ledit analyseur d'images (9) est orienté par rapport au dispositif optique, de telle sorte que les lignes de balayage de l'image des chiffres soient disposées dans le sens de la hauteur des chiffres.

5. Dispositif selon l'une quelconque des revendications 3 et 4, caractérisé en ce que ledit codeur numérique est relié à un ordinateur central par une ligne téléphonique (19) et le dispositif comporte des moyens pour transmettre les signaux binaires relevés par ledit codeur numérique audit ordinateur central par ladite ligne téléphonique.

6. Dispositif selon la revendication 4, pour relever à distance un groupe de compteurs appartenant à un même ensemble, par exemple à un même bâtiment, comportant au moins un poste téléphonique (20), caractérisé en ce qu'il comporte un équipement de télétransmission (16), commun audit groupe, qui est intercalé entre la ligne (19) et le poste téléphonique (20), lequel équipement de télétransmission reçoit tous les appels téléphoniques arrivant sur la ligne et comporte un code d'adresse particulier et des moyens pour vérifier, après chaque appel, qu'il reçoit de l'ordinateur central ledit code d'adresse dans un délai déterminé après avoir pris la ligne téléphonique et ledit équipement de télétransmission comporte des moyens pour commander séquentiellement l'analyse des images des indicateurs numériques de tous les compteurs dudit groupe lorsqu'il a reçu ledit code d'adresse dans le délai voulu.

7. Dispositif selon la revendication 6, caractérisé en ce que ledit équipement de télétransmission comporte, en outre, des moyens pour envoyer audit poste téléphonique (20) des signaux de sonneries'il n'a pas reçu ledit code d'adresse dans le délai voulu.

8. Dispositif selon la revendication 6, caractérisé en ce que chaque compteur (1) comporte un boîtier (4) contenant un dispositif optique (8) et un analyseur d'images (9), lesquels analyseurs sont connectés sur un codeur numérique (17) commun à tous les compteurs d'un même groupe et ledit équipement de télétransmission (16) comporte un multiplexeur ($14_1$ ..14n), qui lui permet de commander séquentiellement l'analyse des images des indicateurs numériques des divers compteurs (1) dudit groupe et d'envoyer séquentiellement les signaux vidéo délivrés par chaque analyseur d'images sur ledit codeur numérique commun (17).

9. Dispositif selon la revendication 6, caractérisé en ce que chaque compteur ($1_1$...1n) dudit groupe comporte un boîtier ($4_1$..4n), duquel part un groupement de fibres optiques ($43_1$...43n) aboutissant sur un barillet fixe (38) placé dans une armoire (36) renfermant les équipements communs audit groupe et ladite armoire contient, en outre, un barillet tournant (39) qui est coaxial audit barillet fixe et qui porte un analyseur d'image (9), lequel barillet tournant est entraîné en rotation par un moteur pas à pas (40) commandé par ledit équipement de télétransmission.

10. Dispositif selon l'une quelconque des revendications 8 et 9, caractérisé en ce que chaque boîtier (4, $4_1$...4n) contient une lampe (6, $6_1$ ..6n) et l'allumage ainsi que l'extinction des lampes équipant tous les boîtiers d'un même groupe sont commandés simultanément par ledit équipement de télétransmission (16).

11. Dispositif selon la revendication 3, caractérisé en ce qu'il comporte un analyseur d'images (45) comportant une seule rangée de pixels qui est disposée parallèlement à la hauteur desdits chiffres, lequel analyseur d'images est monté sur un support mobile (60) qui est solidaire de l'équipage mobile (56) d'un électro-aimant (55), lequel équipage mobile est solidaire d'un piston (57) portant des perforations (58) qui appartient à un amortisseur hydraulique (62) qui comporte un ressort (59) de rappel dudit piston.

12. Dispositif selon la revendication 3, caractérisé en ce qu'il comporte un appareil portatif (81) qui est relié par un conducteur (4a) à un analyseur d'images mobile (4), lequel appareil portatif comporte un codeur (82) qui convertit les signaux vidéo en signaux binaires, un processeur (83) associé à une mémoire vive (84), une mémoire contenant un logiciel permettant d'identifier chaque chiffre décimal, de convertir ce chiffre décimal en un nombre binaire et de stocker lesdits nombres binaires dans ladite mémoire vive et une prise entrée/sortie (98) qui permet de connecter ledit appareil portatif à un ordinateur central et de transférer lesdits nombres binaires dans celui-ci.

Fig. 1

Fig. 2

Fig.3

143802

Fig-4

143802

0279759

Fig 5

0279759

Sorties

13

55

34

31

32

30

33

29

Fig.5

Fig. 7

Fig. 6

Fig. 8

2

1 3 5 8 9

45

45a

44

45

47

46

Fig.10

2

Fig.11

48 49 50 51 52

61a

46

44

47

61

60

62

57

58

59

56

55

54

53

Fig.12

0279759

Fig.13

71^I  71^II  71^III  71^IV  71^n

54
65
66
68
64
64a
67
69
70
71
71a
73
72
74
75
19

0279759

Fig.14

0279759

Fig.15

Fig.16

Office européen
des brevets

**RAPPORT DE RECHERCHE EUROPEENNE**

Numero de la demande

EP 88 43 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 208 420 (ROCHAR) <br> * Page 1, colonne de droite, ligne 32 - page 3, colonne de gauche, ligne 28; figures * | 1 | G 01 D 5/39 |
| A | | 2-4,8 | |
| | --- | | |
| Y | US-A-4 355 205 (F.E. LOWE) <br> * Résumé * | 1 | |
| A | | 5-7 | |
| | --- | | |
| A | GB-A-1 405 418 (SOLARTRON) <br> * Page 1, ligne 49 - page 2, ligne 70; figures * | 1,3,12 | |
| | --- | | |
| A | US-A-4 070 692 (J.D. PARKS) <br> * Résumé * | 1-4,12 | |
| | --- | | |
| A | DE-B-1 217 668 (SIEMENS & HALSKE) <br> * Colonne 3, ligne 3 - colonne 6, ligne 12; figures * | 1-5 | |
| | ----- | | |

**DOMAINES TECHNIQUES RECHERCHES (Int. Cl.4)**

G 01 D
H 04 M
G 06 K

Le présent rapport a été établi pour toutes les revendications

| Lieu de la recherche | Date d'achèvement de la recherche | Examinateur |
|---|---|---|
| LA HAYE | 15-04-1988 | RAMBOER P. |